(19) Europäisches Patentamt
European Patent Office
Office européen des brevets

(11) Publication number: 0 235 831 B1

# (12) EUROPEAN PATENT SPECIFICATION

(45) Date of publication of patent specification:
13.11.91 Bulletin 91/46

(51) Int. Cl.⁵ : C08J 9/224

(21) Application number: 87200048.4

(22) Date of filing: 15.01.87

(54) Process for preparing expanded and/or expandable plastic particles with dyestuff layer, and also object moulded therefrom.

(30) Priority: 27.01.86 NL 8600174

(43) Date of publication of application:
09.09.87 Bulletin 87/37

(45) Publication of the grant of the patent:
13.11.91 Bulletin 91/46

(84) Designated Contracting States:
AT BE CH DE ES FR GB GR IT LI LU NL SE

(56) References cited:
AU-B- 533 848
DE-A- 2 735 029
FR-A- 2 160 875
GB-A- 1 392 467
GB-A- 2 055 115
US-A- 3 591 409
US-A- 3 850 860

(73) Proprietor: Holland Colours B.V.
Halvemaanweg 1
NL-7323 RW Apeldoorn (NL)

(72) Inventor: Bes, Richard Francois Theodor
Broeklanderweg 23
NL-7341 PK Apeldoorn (NL)
Inventor: Knol, Jan Dirk
Wieselsekampweg 35
NL-7345 CJ Apeldoorn (NL)

(74) Representative: van der Veken, Johannes
Adriaan et al
EXTERPATENT B.V. P.O. Box 90649
NL-2509 LP 's-Gravenhage (NL)

## Description

### BACKGROUND OF THE INVENTION

This invention relates to a process for preparing expanded and/or expandable plastic particles, in particular polystyrene particles, provided with a colorant, in which said colorant, being incorporated in a coating layer, is applied to the surface of said expanded and/or expandable plastic particles said coating layer comprising a carrier material.

Such a process is known from AU-B-533848. In said publication is described the application of a coloured coating layer onto the surface of polymeric beads. To form the coating layer the polymeric beads, such as expandable polystyrene beads, are mixed with a solution comprising a colorant, a polymeric binder material and a volatile solvent.

After a blending time which is sufficient to coat the beads uniformly, the beads are subjected to a gas-stream flow to evaporate the solvent.

Such known process has the drawback of being a solution coating process, which is necessary to apply the desired coating which necessitates an extra solvent evaporation step; the cost of the thus prepared beads is therefore relatively high.

### SUMMARY OF THE INVENTION

Surprisingly it has now been found that equally good results may be obtained if, according to the invention the coating layer on beads or in general particles is formed by applying particles of a fusible carrier material having a melting point between 30 and 120 °C with which the colorant is intimately mixed to the surface of said beads or in general particles and said carrier being compatible with the plastic, permits bonding of plastic particles at elevated temperature and pressure.

In particular the expanded and/or expandable plastic particles which have been prepared in the process according to the invention enable to obtain very good results when used to manufacture articles for use in packaging and/or decoration as will be described hereinafter.

Expanded particles such as for instance polystyrene foam plastic particles may have, because of their composition an exceptionally dazzling white colour, as a result of which working with objects moulded from such polystyrene foam plastic particles gives rise to eye complaints. For that reason the use of polystyrene foam plastic plarticles for manufacturing packagings and the like is sometimes less attractive.

Another drawback is that it objects such as sheets made from such particles are applied to concrete surfaces, too great at contrast exists between, for example, the normal concrete colour and the sheets.

The invention now provides a process for preparing expanded and/or expandable plastic particles which do not have these disadvantages and, said process being a simple process resulting in a low cost.

Such expanded and/or expandable plastic particles which have been prepared in the process according to the invention, have the great advantage that any desired and matched colour can be imparted to them without, however, high costs.

In view of the invention reference is made to FR-A-2160875 in which are described expandable particles which are coated by a mixture of a glycerol-ester and a finely divided inorganic material. As an example of such glycerol-ester olive oil is mentioned; the inorganic material may be a compound like magnesium carbonate.

In order to obtain an even distribution of the total mixture over the surface of the plastic particles a solvent is added such as isopropanol.

No reference is made of the incorporation of a colourant in the mixture in order to decrease the reflectiveness of the particles as in the present invention.

In the invention use is made of a glycerol-ester which is solid at ambient temperature; for the purpose of colouring the particles a colourant is added to the mixture.

In GB-A-2055115 compositions are described for colouring PVC. The compositions have the same character as the composition used in the present application, however this British publication aims for the preparation of plastic objects which are throughout their body uniformly coloured whereas the present invention concerns the production of plastic particles, such as polystyrene particles, which have a surface colouring.

By colouring the particles only by applying a surface coating layer of a carrier which is intimately mixed with the dyestuff particles a certain desired colour can be imparted at any time to plastic foam particles, in particular polystyrene foam plastic particles, which are colourless per se.

According to the invention the coating layer is formed by applying particles of the carrier with which the colorant is intimately mixed. Said particles comprising carrier materiaal and colorant are preferably obtained by intimately mixing the molten carrier with a colorant and then spraying the mixture to form fine particles or forming droplets.

The formation of the coating layer can be promoted, in particular, by heating the expanded and/or expandable initial plastic particles slightly, as a result of which the particles of the carrier, with which the colorant is intimately mixed, bond themselves ideally to the initial plastic particles,

In particular, a good bonding is obtained by mixing unexpanded plastic particles which contain a foaming agent with the particles of the carrier in which the dyestuff particles are incorporated, as a result of which the said particles bond themselves to the plastic particles. The heat used for expanding the particles then provides for an ideal bonding of a layer of the carrier containing dyestuff to the surface of the expanded plastic particles.

Obviously, the plastic particles with the applied carrier must remain separate from each other during transport so that the user can manufacture an object from the particles through a plastic/plastic bonding at the desired point as a result of heating the plastic particles; the particles of the invention show this desired property.

The carrier is expediently used in the form of a plastic processing additive, in particular a carrier which has lubricant action.

A very suitable and recommendable fusible carrier material contains, for example, a glycerol monostearate.

The invention also reltes to an object obtained by bonding expanded and/or expandable plastic particles, which have been prepared in the process according to the invention to each other, in particular by means of heat and pressure.

In the foregoing, the term "expandable plastic particles", is understood to mean plastic particles in which a foaming agent is incorporated, which foaming agent causes the plastic particles to expand on heating to form plastic foam particles,

## DESCRIPTION OF THE DRAWINGS

The invention will now be explained on the basis of an exemplary embodiment by means of the drawing, in which:

Figure 1 shows a section of an unexpanded polystyrene particle provided with a coating layer containing dyestuff according to the invention;

Figure 2 shows a section of an expanded polystyrene particle containing foaming agent also provided with a coating layer containing dyestuff according to the invention; and

Figure 3 shows a closed mould incorporating expanded plastic particles according to Figure 1, which plastic particles are bonded to each other by heating and under pressure to form a sheet.

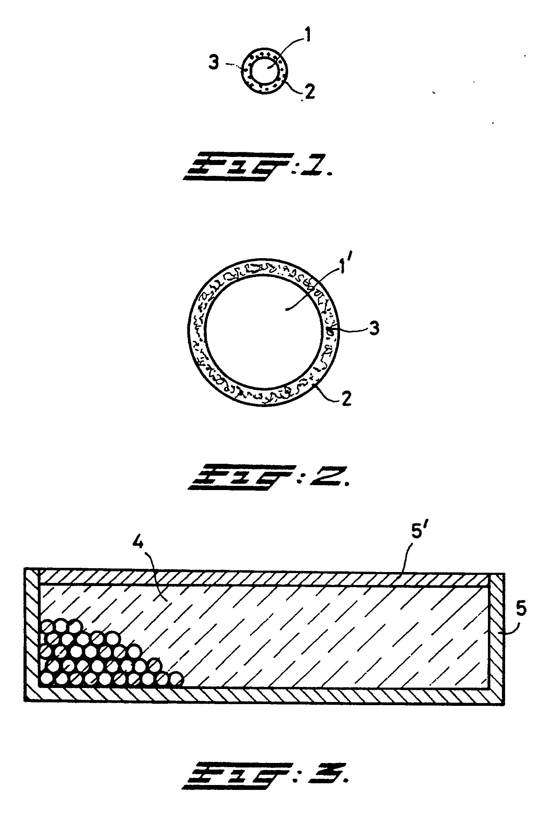

Figure 1 shows an unexpanded polystyrene particle 1, incorporating a foaming agent, which carries on its surface a surface coating layer 2 formed from a fusible carrier in the form of glycerol monostearate in which grey colorant particles 3 are incorporated. In this manner the whiteness of the polystyrene particles 1, which is undesirable for the moulder and fabricator, can be considerably reduced.

Although a glycerol monostearate has been mentioned above as carrier, all wax and wax-like substances, such as, for example, pentaerythritol esters of fatty acids, hydrogenated castor oil and the like, can be used for this purpose. To colour the polystyrene particles, the colourless polystyrene particles are mixed with the desired quantity of a free-flowing body of particles of the carrier in which the dyestuff particles are incorporated. Said particles are obtained by spraying a body of molten carrier and dyestuff particles mixed therewith at ambient temperature, at which the particles formed by spraying solidify.

It will be clear that the polystyrene particles 1 are colourless per se and can therefore be manufactured in the normal manner.

Figure 2 shows a polystyrene foam particle 1′ obtained from polystyrene, in which a foaming agent is incorporated, according to Figure 1. On heating, such a particle 1 will expand to a particle 1′ as shown in Figure 2. Before expansion there has already been applied to the particle 1 a surface coating layer 2 consisting of a carrier, such as glycerol monostearate, in which the dyestuff particles are incorporated. During the action of heat, which is necessary for the expansion, the carrier layer is intimately bonded to the polystyrene foam plastic particles.

Finally, Figure 3 shows a sheet 4 moulded from expanded polystyrene particles according to Figure 1 which are bonded to each other by heating and under pressure. On heating the surface coating layer 2 obviously becomes elastic so that the polystyrene particles 1 are pressed against each other and sinter together under the influence of heat, resulting in the bonding of the plastic particles themselves.

To mould the sheet 4, polystyrene particles according to Figure 1 are poured into a mould 5 which is then closed by means of a cover 5′. On heating, the particles 1 with the coating layer 2 and the colorant particles incorporated therein expand so that the particles are pressed against each other. At the same time the sheet is produced by the sintering together of the polystyrene particles.

As stated above, a carrier is advantageously used which consists of a plastic processing additive since in this manner the particles can be processed without any disadvantageous effect due to the nature of the carrier.

## Claims

1. A process for preparing expanded and/or expandable plastic particles, in particular polystyrene particles, provided with a colorant, in which said colorant, being incorported in a coating layer, is applied to the surface of said expanded and/or expandable plastic particles, said coating layer comprising a carrier material characterized in that said coating layer (2) is formed by applying particles of a fusible carrier material with which the colorant (3) is intimately mixed, said fusible carrier material having a melting point between 30 and 120 °C, and being compatible with the plastic, permits bonding of plastic particles (1, 1′) at elevated temperature and pressure.

2. The process according to claim 1, characterized in that the fusible carrier material consists of a plastic-processing additive.

3. The process according to claims 1-2, characterized in that the fusible carrier material has lubricant action.

4. The process according to claims 1-3, characterized in that the fusible carrier material contains a glycerol monostearate.

5. An object obtained by bonding expanded plastic particles to each other, characterized in that said plastic particles (1, 1') which have been prepared in the process according to one or more of the preceding claims are bonded.

6. The object according to claim 5, characterized in that the plastic particles (1, 1') are bonded to each other by means of heat and pressure.

## Patentansprüche

1. Verfahren zur Herstellung von expandierten und/oder expandierbaren Plastikteilchen, insbesondere Polystyrolteilchen, die mit einem Farbmittel versehen sind, in denen das einer Überzugsschicht einverleibte Farbmittel auf die Oberfläche der expandierten und/oder expandierbaren Plastikteilchen aufgebracht ist, wobei die Überzugsschicht ein Trägermaterial umfaßt, dadurch gekennzeichnet, daß die Überzugsschicht (2) gebildet wird, idem Teilchen eines schmelzbaren Trägermaterials, mit dem das Farbmittel (3) innig gemischt ist, aufgebracht werden, wobei das schmelzbare Trägermaterial einen Schmelzpunkt zwischen 30 und 120°C hat und, da es mit dem Plastikmaterial verträglich ist, eine Verbindung der Plastikteilchen (1, 1') bei erhöher Temperatur und erhöhtem Druck zuläßt.

2. Verfahen gemäß Anspruch 1, dadurch gekennzeichnet, daß das schmelzbare Trägermaterial aus einem Additiv der Plastikverarbeitung besteht.

3. Verfahren gemäß den Ansprüchen 1 und 2, dadurch gekennzeichnet, daß das schmelzbare Trägermaterial Gleitmittelwirkung hat.

4. Verfahren gemäß den Ansprüchen 1 bis 3, dadurch gekennezeichnet, daß das schmelzbare Trägermaterial ein Glycerolmonostearat enthält.

5. Gegenstand, der erhalten wird, indem man expndierte Plastikteilchen miteinander verbindet, dadurch gekennzeichnet, daß Plastikteilchen (1, 1'), die nach dem Verfahren gemäß einem oder mehreren der vorhergehenden Ansprüche hergestellt wurden, verbunden werden.

6. Gegenstand gemäß Anspruch 5, dadurch gekennzeichnet, daß die Plastikteilchen (1, 1') mittels Wärme und Druck miteinander verbunden werden.

## Revendications

1. Procédé de préparation de particules de matière plastique expansée et/ou expansible, en particulier de particules de polystyrène, dotées d'un colorant, dans lequel ledit colorant, incorporé dans une couche de revêtement, est appliqué à la surface desdites particules de matière plastique expansée et/ou expansible, ladite couche de revêtement comprenant une matière de support, caractérisé par le fait que ladite couche de revêtement (2) est formée par application de particules d'une matière de support fusible avec laquelle le colorant (3) est intimement mélangé, ladite matière de support fusible ayant un point de fusion compris entre 30° et 120°C, et, étant compatible avec la matière plastique, permettant la liaison des particules de matière plastique (1, 1') à une température et une pression élevées.

2. Procédé selon la revendication 1, caractérisé par le fait que la matière de support fusible consiste en un additif de traitement des matières plastiques.

3. Procédé selon l'une des revendications 1 et 2, caractérisé par le fait que la matière de support fusible a une action lubrifiante.

4. Procédé selon l'une des revendications 1 à 3, caractérisé par le fait que la matière de support fusible contient un monostéarate de glycérol.

5. Un article obtenu par liaison de particules de matière plastique expansée les unes avec les autres, caractérisé par le fait que lesdites particules de matière plastique (1, 1'), qui ont été préparées suivant le procédé selon l'une ou plusieurs des revendications précédentes, sont liées.

6. Article selon la revendication 5, caractérisé par le fait que les particules de matière plastique (1, 1') sont liées les unes aux autres au moyen de chaleur et de pression.

FIG:1.

FIG:2.

FIG:3.